# EUROPÄISCHE PATENTSCHRIFT

(11) **EP 0 382 324 B1**
(45) Veröffentlichungstag und Bekanntmachung des Hinweises auf die Patenterteilung: **22.09.1993**
(21) Anmeldenummer: 90250026.3
(22) Anmeldetag: 01.02.1990
(51) Int. Cl.: H01H 33/91, H01H 33/02

(54) **Metallgekapselter Druckgas-Leistungsschalter mit einem Schaltgestänge**
Metal-clad pressurized-gas power switch with an operating rod
Disjoncteur de puissance à gaz, comprimé logé dans une enceinte métallique avec tige de commande

(30) Priorität: 07.02.1989 DE 3904146
(43) Veröffentlichungstag der Anmeldung: 16.08.1990
(73) Patentinhaber: SIEMENS AKTIENGESELLSCHAFT, 80333 München (DE)
(72) Erfinder: Gilmozzi, Günther, D-1000 Berlin 13 (DE); Kelch, Thomas, D-1000 Berlin 28 (DE); Meinherz, Manfred, D-1000 Berlin 28 (DE); Veuhoff, Friedrich-Wilhelm, D-1000 Berlin 44 (DE)

(56) Entgegenhaltungen:
- EP-A- 0 075 668
- DE-A- 2 847 221
- DE-A- 2 943 386
- DE-U- 7 601 366
- GB-A- 2 089 571

## Beschreibung

Die Erfindung betrifft einen metallgekapselten Druckgas-Leistungsschalter mit einem gasgefüllten Gehäuse gemäß den Merkmalen des ersten Teils des Anspruchs 1, wie aus DE-A-2 943 386 bekannt.

Bei einem bekannten Leistungsschalter dieser Art besteht das Schaltgestänge aus einer Kombination von isolierenden und metallischen Schaltstangen, wobei an der Unterbrechereinheit eine aus Metall bestehende Schaltstange angekoppelt ist. Derartige Schaltstangen sind unempfindlich gegen die aus der Unterbrechereinheit bei den Schaltvorgängen austretenden heißen Schaltgase. Die Isolation gegen das geerdete Gehäuse übernimmt eine weitere Schaltstange, die mit einem Antriebsteil und mit der metallischen Schaltstange verbunden ist. Der Erfindung liegt hiervon ausgehend die Aufgabe zugrunde, bei gleicher dielektrischer Sicherheit die axiale Baulänge eines Leistungsschalters der angegebenen Art zu verringern.

Die Aufgabe wird gemäß der Erfindung dadurch gelöst, daß zwischen der Unterbrechereinheit und dem Stützisolator ein die Strömung der Schaltgase beim Ausschalten aufnehmendes und leitendes Richtorgan angeordnet ist, das nur einen Teil der Schaltgase in der Richtung der wenigstens einen Schaltstange hindurchtreten läßt und den verbleibenden Teil bis in wenigstens radialer Richtung umlenkt. Bei dieser Anordnung wird kein metallischer Teil des Schaltgestänges benötigt, weil die isolierende Schaltstange die Übertragung der Schaltbewegung zwischen der Unterbrechereinheit und einem die Schaltgewegung bereitstellenden Antriebsteil sowie die Isolation zwischen diesen Teilen wahrnehmen kann. Von der Beaufschlagung mit den Schaltgasen wird die Schaltstange dadurch entlastet, daß ein wesentlicher Teil der Schaltgase unmittelbar am Austritt aus der Schalteinheit durch das Richtorgan seitwärts abgelenkt wird. Erfolgt die Umlenkung stärker als in radialer Richtung, so wird die Zirkulation des Gases in dem Gehäuse des Leistungsschalters gefördert und ein Stau durch unmittelbars Auftreffen auf dem Gehäuse des Leistungsschalters vermieden.

Die Abzweigung des für die Umlenkung vorgesehenen Teiles des Stromes von Schaltgasen kann dadurch erreicht werden, daß das Richtorgan eine Eintrittsöffnung für die Schaltgase und eine mit dieser fluchtend angeordnete Austrittsöffnung mit einem gegenüber der Eintrittsöffnung geringeren Querschnitt aufweist. Dabei kann der Umlenkvorgang verlustarm dadurch erfolgen, daß ein mit der Austrittsöffnung versehener Wandteil des Richtorgans eine die Austrittsöffnung ringförmig umgebende gewölbte Vertiefung zur Umlenkung der Schaltgase in wenigstens radiale Richtung aufweist.

Bereits im Bereich des Richtorgans kann die wenigstens eine vorgesehene Schaltstange vor einer unmittelbaren Beaufschlagung durch Schaltgase dadurch geschützt werden, daß ein mit der Eintrittsöffnung und der mit der Austrittsöffnung versehene Wandteil des Richtorgans entsprechen der Anzahl der Schaltstangen durch Schirmrippen in solcher Anordnung verbunden sind, daß die Schaltstangen gegen die Strömung der Schaltgase abgeschirmt sind.

Das Richtorgan kann zugleich die Aufgabe einer elektrischen Anschlußvorrichtung der Unterbrechereinheit dadurch wahrnehmen, daß die erwähnten Wandteile brückenartig durch einen als elektrisches Anschlußstück ausgebildeten Steg verbunden sind.

Ferner kann das Richtorgan als Befestigungsmittel für die Unterbrechereinheit dienen. Hierzu kann der mit der Austrittsöffnung versehene Wandteil des Richtorgans an seiner dem Stützisolator zugewandten Seite eine dem Endbereich des Stützisolators angepaßte zentrische Vertiefung besitzen. Zur dielektrischen Enlastung des Stützisolators an diesem Verbindungsbereich kann das Richtorgan den anschließenden Endbereich des Stützisolators mit einem abgerundeten Ringwulst umgebend ausgebildet sein.

An der dem Stützisolator abgewandten Seite der Unterbrechereinheit kann ein weiteres ähnliches Richtorgan angeordnet sein, wobei die Austrittsöffnung des weiteren Richtorgans am Eingang eines innerhalb des Gehäuses angeordneten zusätzlichen Pufferraumes angeordnet ist. Ein solcher Pufferraum, der beispielsweise durch einen hohlen Anschlußleiter der Unterbrechereinheit gebildet sein kann, wird ein Teil der Schaltgase vorübergehend durch Kompression gespeichert und gelangt daher nicht unmittelbar in das Gehäuse des Leistungsschalters. Dies vermindert die dielektrische und mechanische Beanspruchung der Isolierteile des Leistungsschalters bei den Schaltvorgängen.

Wie bereits erwähnt, ist das Richtorgan auch als Befestigungsmittel für die Unterbrechereinheit geeignet und vorgesehen. In diesem Zusammenhang können zur Verbindung des nur aus Isolierstoff bestehenden Stützisolators mit dem Richtorgan an dem Stützisolator unter Freilassung einer zum Durchtritt der wenigstens einen Schaltstange und von Schaltgasen bemessenen Öffnung ein eingezogener Randbereich und eine Klemmplatte vorgesehen sein, die bei Auflage am Randbereich des Stützisolators sich in dessen Öffnung erstreckende Wandteile zur Abgrenzung eines zum Durchtritt der wenigstens einen Schaltstange bestimmten Bereiches und eines für die Abströmung von Schaltgasen aus der Unterbrechereinheit bestimmten zentralen Öffnung aufweist. Durch diese Gestaltung der Klemmplatte wird gleichfalls eine Abschirmung der Schaltstange bzw. der Schaltstangen gegenüber der Strömung der Schaltgase erreicht.

An seinem dem Richtorgan gegenüberliegenden, d. h. der Unterbrechereinheit abgewandten Endbereich kann der Stützisolator außen einen gegenüber dem Rand axial zurückgesetzt angeordneten angeformten Flanschring tragen, der einem an dem Gehäuse angeordneten, als Gegenlager dienenden Tragring angepaßt ist. Hierdurch wird erreicht, daß sich der Stützisolator mit seinem Rand in den Tragring hineinerstreckt und somit die Schaltgase an den Befestigungsteilen vorbeigeleitet werden. Auch diese Maßnahme wirkt sich vorteilhaft auf die dielektrische Festigkeit der Isolieranordnung aus.

Während die beschriebene Anordnung im Prinzip mit einer einzigen isolierenden Schaltstange ausführbar ist, empfiehlt es sich jedoch, zwei parallel angeordnete Schaltstangen vorzusehen, die gelenkig mit dem Schaltkontakt und einem zur Erzeugung einer Gasströmung dienenden Blaszylinder sowie an ihren entgegengesetzten Enden mit einem Gabelhebel verbunden sind, der über eine abgedichtet in das Gehäuse des Leistungsschalters eingeführte Welle zum Ein- und Ausschalten antreibbar ist.

Der Stützisolator kann vorzugsweise ohne eingeformte Metallarmaturen, d. h. nur aus Isolierwerkstoff hergestellt sein und kann die Gestalt eines hohlen Kegelstumpfes aufweisen, dessen Mündungsweite im Bereich der Befestigung an dem gehäuseseitigen Tragring entsprechend dem Schwenkwinkel der Schaltstangen beim Ein-und Ausschalten gegenüber dem an dem Richtorgan befestigten Endbereich erweitert ist. Durch eine geeignete Wahl des Kegelwinkels kann somit dafür gesorgt sein, daß in Abhängigkeit von der Kurbelbewegung der Schaltstangen ein ausreichender Abstand zu dem Stützisolator gewährleistet ist. Durch seine Trichterform wirkt der Stützisolator auch als Diffusor zur Verteilung der Schaltgasströmung

Die Erfindung wird im folgenden anhand des in den Figuren dargestellten Ausführungsbeispieles näher erläutert.

Die Figur 1 zeigt in einer stark verkleinerten schematischen Darstellung im Längsschnitt einen metallgekapselten Druckgas-Leistungsschalter für eine Hochspannungsschaltanlage zur Erläuterung der grundsätzlichen Bestandteile des Leistungsschalters.

In der Figur 2 ist in einer gegenüber der Figur 1 vergößerten Darstellung derjenige Bereich des Leistungschalters im Schnitt dargestellt, in dem die Verzweigung der Schaltgase in einen axialen und einen radialen Gasstrom stattfindet.

In der Figur 3 sind in einer gegenüber der Figur 2 um 90° gedrehten Längsschnitt das Richtorgan, der Stützisolator und angrenzende Bereiche des Leistungsschalters gezeigt.

In der Figur 4 ist das Richtorgan in einem axialen Schnitt IV-IV in Figur 3 teilweise aufgebrochen dargestellt, um zum Schutz von Schaltstangen vorgesehene Schirmrippen zu zeigen.

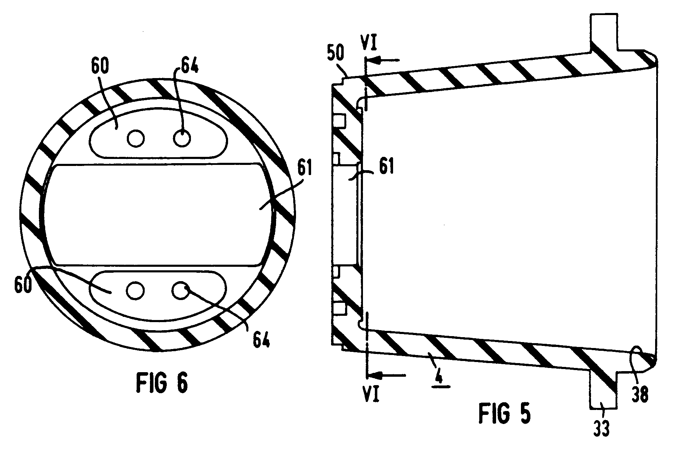

Ein Stützisolator ist in der Figur 5 in einem axialen Schnitt gezeigt. Einen dem Richtorgan zugewandten Endbereich des Stützisolators gemäß der Figur 5 zeigt die Figur 6 in einem Schnitt VI-VI in Figur 5.

Eine Klemmplatte zur Verbindung des Stützisolators mit dem Richtorgan zeigen die Figuren 7, 8 und 9 in 90° gedrehten Ansichten bzw. Schnitten.

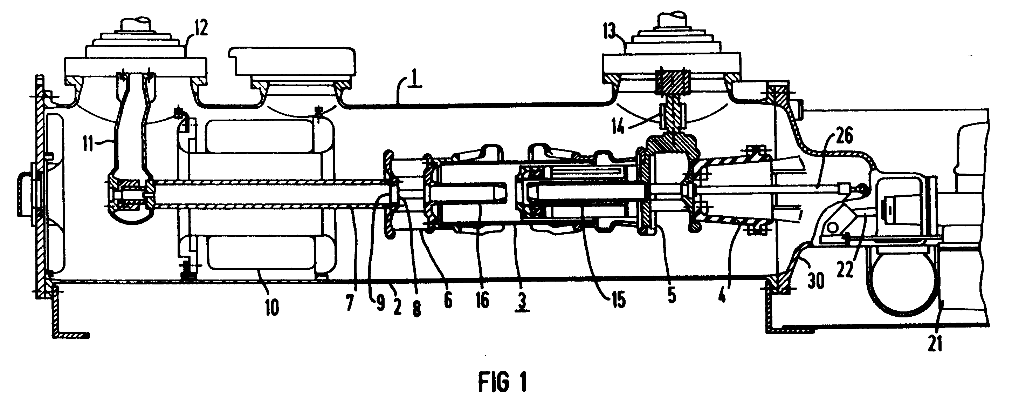

Der in der Figur 1 gezeigte metallgekapselte Druckgas-Leistungsschalter 1 ist insbesondere zum Einsatz in metallgekapselten und druckgasisolierten Hochspannungs-Schaltanlagen vorgesehen.

In einem beispielsweise aus Stahlblech bestehenden Gehäuse 2 ist eine als Ganzes mit 3 bezeichnete Unterbrechereinheit angeordnet, deren Längsachse etwa mit der Längsachse des Gehäuses 2 zusammenfällt. Zur Befestigung der Unterbrechereinheit 3 sind an deren Antriebsseite ein hohler, etwa kegelstumpfförmiger Stützisolator 4 in Verbindung mit einem Richtorgan 5 und an dem gegenüberliegenden Ende ein weiteres Richtorgan 6 in Verbindung mit einem Rohrleiter 7 vorgesehen, der zugleich als Primärwicklung eines Stromwandlers 10 dient. Der Rohrleiter 7 ist seinerseits über einen zugleich der Stromleitung dienenden Haltearm 11 und eine Durchführung 12 gegenüber dem Gehäuse 2 abgestützt. Eine weitere Durchführung 13 steht über eine Kuppelkontaktanordnung 14 mit dem Richtorgan 5 in Verbindung, dessen Aufbau und Funktionen noch erläutert werden.

Die Unterbrechereinheit 3 gehört zum Typ der Blaskolbenschalter und weist zwei einander gegenüberstehende und axial fluchtende Kontaktrohre 15 und 16 auf sowie einen stehenden Blaskolben 17 und einen beweglichen Blaszylinder 18. In der dargestellten Ausschaltstellung befinden sich der Blaskolben 17, der Blaszylinder 18 und ein zwischen dem Blaskolben 17 und dem Kontaktrohr 15 gleitend verschiebbarer Schaltkontakt 20 im Bereich des Kontaktrohres 15. Zum Einschalten werden in bekannter Weise der Schaltkontakt 20 und der Blaszylinder 18 nach links über das Kontaktrohr 16 geschoben, so daß die Kontaktrohre 15 und 16 durch den Schaltkontakt 20 überbrückt sind. Die Antriebsbewegungen zum Ein- und Ausschalten werden durch eine Antriebseinheit 21 ausgelöst, die außerhalb des Gehäuses 2 etwa in dessen axialer Verlängerung angeordnet ist und die mittels einer Schubstange 22 und einer Kurbel 23 eine Welle 24 betätigt. Diese ist in bekannter Weise gasdicht durch die Wandung des Gehäuses 2 hindurchgeführt und trägt dort einen Gabelhebel 25. Mit den Enden des Gabelhebels 25 sind gelenkig zwei parallel zueinander angeordnete Schaltstangen 26 verbunden, die sich durch den Stützisolator 4 und das Richtorgan 5 erstrecken und in einer noch zu beschreibenden Weise mit dem Blaszylinder 18 und dem Schaltkontakt 20 verbunden sind.

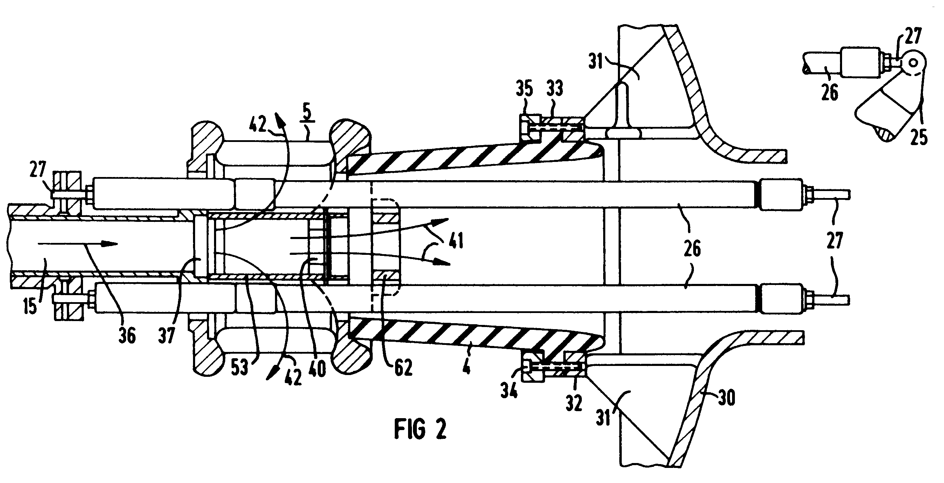

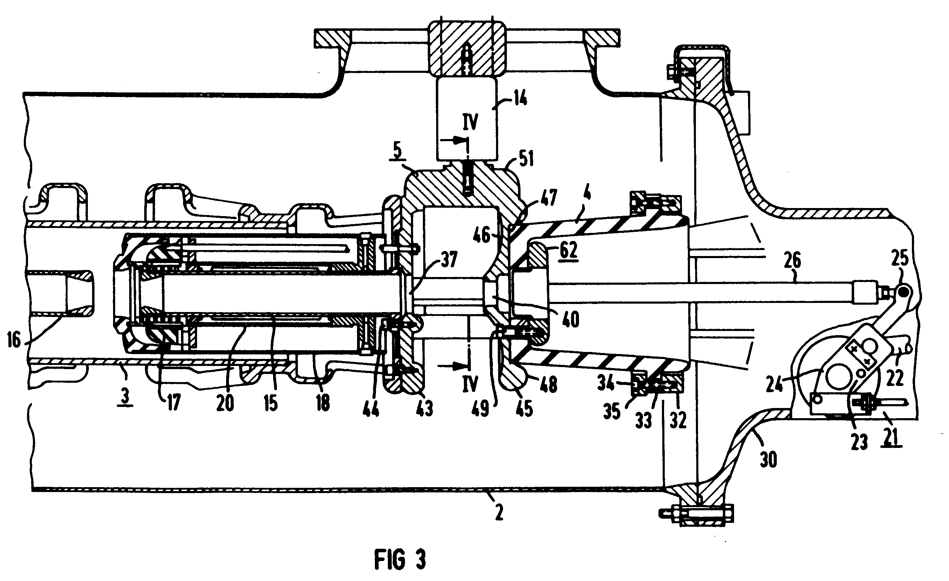

In der Figur 2 ist ein Ausschnitt des Leistungsschalters 1 gemäß den Figuren 1 und 3 im Bereich des Stützisolators 4 und der Schaltstangen 26 gezeigt. Diese Darstellung ist um 90° gegenüber den vorgenannten Figuren gedreht, so daß beide parallel angeordneten Schaltstangen 26 sichtbar sind. Ferner ist erkennbar, daß die Schaltstangen 26 an beiden Enden zur gelenkigen Verbindung mit dem Schaltkontakt 20 bzw. mit dem Gabelhebel 25 mit Augenstücken 27 versehen sind. Als Gegenlager des Stützisolators 4 dient ein Tragring 32, der an einem Kopfstück 30 des Gehäuses 2 innen über Rippen 31 gehalten ist. Der Tragring 32 und die Rippen 31 können im Gießverfahren einstückig mit dem Kopfstück 30 hergestellt sein. Auf dem Tragring 32 liegt der Stützisolator 4 mit einem angeformten Flanschring 33 an, der in der Figur 5 nochmals gesondert gezeigt ist. Schrauben 34 verspannen den Stützisolator 4 gegenüber dem Tragring 32 mittels eines auf den Flanschring 33 aufgelegten Druckringes 35.

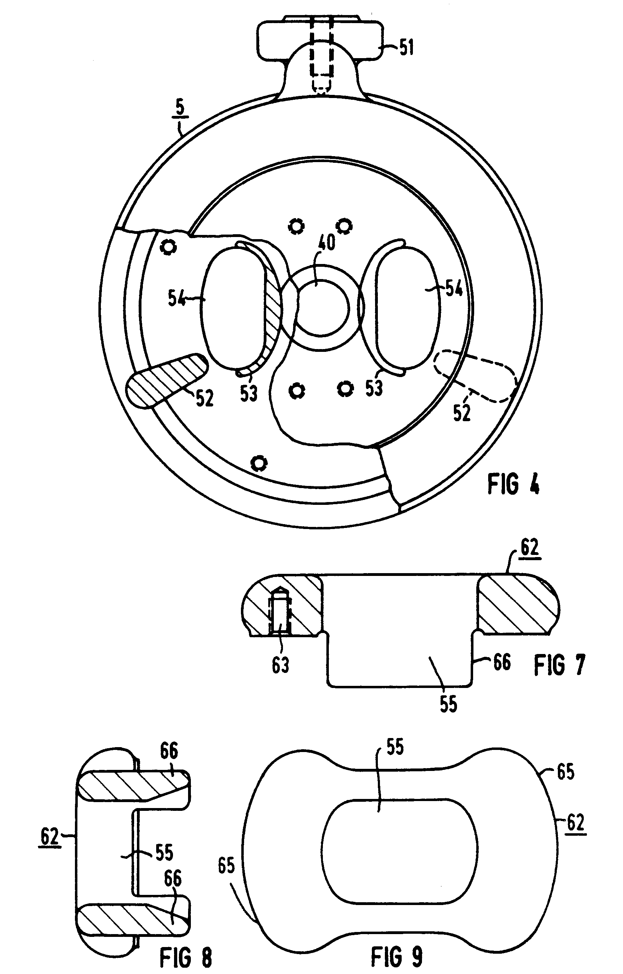

Während der Aufbau des Richtorgans 5 anhand der Figuren 3 und 4 noch gesondert erläutert wird, dient die Figur 2 insbesondere zur Veranschaulichung der Wirkungsweise des Richtorgans beim Ausschalten des Leistungsschalters 1. Hierzu ist mit einem Pfeil 36 die Strömung der Schaltgase im Inneren des Kontaktrohres 15 angedeutet. Da einer dem Querschnitt des Kontaktrohres 15 entsprechenden Eintrittsöffnung 37 des Richtorgans 5 an dessen gegenüberliegenden Seite nur eine kleinere Austrittsöffnung 40 gegenübersteht, behält nur ein mit den Pfeilen 41 bezeichneter Teil der Schaltgase die ursprüngliche Strömungsrichtung bei und gelangt somit etwa in der Richtung der Schaltstange 26 durch den Stützisolator 4 in das Gehäuse 2. Ein anderer Teil der Schaltgase, der mit den Pfeilen 42 bezeichnet ist, verläßt den Richtkörper 5 an dessen Umfang. Wie durch die Gestalt der Pfeile 42 angedeutet ist, findet eine mehr als radiale Umlenkung der Schaltgase statt, um ein direktes Aufprallen auf der Wandung des Gehäuses 2 zu vermeiden und stattdessen eine gute Durchmischung kühler und erhitzter Gase durch eine Zirkulation in dem Gehäuse 2 zu erreichen. Einzelheiten des Richtorgans 5 werden nun anhand der Figur 3 näher erläutert.

Das Richtorgan 5 besitzt einen Wandteil 43, in dem sich die Eintrittsöffnung 37 befindet. Dieser Wandteil ist über Schrauben 44 mit der Unterbrechereinheit 3 verbunden. In paralleler Stellung zu dem Wandteil 43 steht ein weiterer Wandteil 45, in dem sich die Austrittsöffnung 40 befindet. Der Wandteil 45 ist innen mit einer ringförmigen und derart gewölbten Vertiefung 46 versehen, daß die in der Figur 2 mit den Pfeilen 42 angedeutete stärker als radiale Umlenkung der Schaltgase zustande kommt. An seiner Außenseite ist der Wandteil 45 mit einer zentrischen Vertiefung 47 versehen, in die der Stützisolator 4 mit seinem Endbereich 50 eingreift.

Die Wandteile 43 und 45 sind nur über einen kleinen Teil ihres Umfanges durch einen Steg 51 brückenartig verbunden. Dieser Steg bildet zugleich einen elektrischen Anschluß der Unterbrechereinheit 3 mittels der bereits bei der Beschreibung der Figur 1 erwähnten Kuppelkontaktanordnung 14.

Beide Wandteile 43 und 45 des Richtorganes 5 sind zusätzlich zu dem Steg 51 durch Stützrippen 52 und Schirmrippen 53 abgestützt. Die Schirmrippen 53 begrenzen hierbei beidseitig der Eintrittsöffnung 37 und der Austrittsöffnung 40 vorgesehene ovale Öffnungen 54, die zum Durchtritt der Schaltstangen 26 vorgesehen sind. Hierdurch wird eine unmittelbare Beaufschlagung der Schaltstangen durch die heißen Schaltgase vermieden. Am größten Teil seines Umfanges ist das Richtorgan 5 somit offen.

Der in den Figuren 5 und 6 gesondert dargestellte Stützisolator 4 hat etwa die Gestalt einen hohlen Kegelstumpfes und weist in seinem Endbereich 50 zwei einander gegenüberliegende eingezogene Bereiche 60 auf, die zum Durchtritt von Verbindungsschrauben vorgesehen sind. Zwischen den Randbereichen verbleibt ein Durchbruch 61 für die Schaltgase und die Schaltstangen 26. Ferner besitzt der Stützisolator 4 an seinem dem Endbereich 50 gegenüberliegenden Ende den bereits erwähnten Flanschring 33, der gegenüber dem Ende des Stützisolators axial zurückgesetzt angeordnet ist. Wie insbesondere die Figur 3 zeigt, ragt aufgrund dieser Gestaltung der Stützisolator durch den gehäuseseitigen Tragring 32 hindurch, so daß die aus dem Tragring 32, dem Flanschring 33, dem Druckring 35 und den Verbindungsschrauben 34 bestehende Befestigungsanordnung vollkommen außerhalb der sich durch den Stützisolator 4 erstreckenden Gasströmung (Pfeile 41 in Figur 2) befindet. Zur weiteren dielektischen Entlastung des Stützisolators 4 ist die zentrische Vertiefung 47 des Wandteiles 45 des Richtorgans 5 von einem abgerundeten Ringwulst 48 (Figur 3) umgeben, der an den Wandteil 45 angeformt ist.

Zur Befestigung des Stützisolators 4 an dem Wandteil 45 des Richtorgans 5 dient eine Klemmplatte 62, die in zwei Schnitten und einer Ansicht in den Figuren 7, 8 und 9 gezeigt ist. Bei einer länglichen, abgerundeten uns seitlich eingezogenen Gestalt (Figur 9) besitzt die Klemmplatte 65 zur Auflage auf den Randbereichen 60 des Stützisolators 4 bestimmte gegenüberliegende Schenkel 62, in denen sich Sacklöcher 63 für Schrauben 49 befinden, die sich durch den Wandteil 45 des Richtorgans 5 (Figur 3) und durch die Durchgangslöcher 64 in den Randbereichen 60 des Stützisolators 4 (Figur 6) erstrecken. Zwischen den Schenkeln 62 erstrecken sich Wandteile 66 (Figuren 7 und 8), deren Form insbesondere aus der Figur 7 ersichtlich ist. Mit diesen Wandteilen erstreckt sich die Klemmplatte 62 in die Öffnung 61 im Endbereich 50 des Stützisolators 4 (Figur 6), um einen zum Durchtritt der Schaltgase vorgesehenen Teil des gesamten Querschnittes der Öffnung 61 von seitlichen, zum Durchtritt der Schaltstangen 26 (Figuren 2 und 3) dienenden Bereichen abzugrenzen. Auch an dieser Stelle werden somit die Schaltstangen gegen eine unmittelbare Beaufschlagung mit heißen Schaltgasen abgeschirmt.

Wie bereits erwähnt, befindet sich am abgangsseitigen Ende der Unterbrechereinheit 3 ein weiteres Richtorgan 6, das ebenfalls die Aufgabe hat, den aus dem Kontaktrohr 16 austretenden Strom von Schaltgasen in einen axialen und einen radialen Teil aufzuteilen. Die etwa parallele Anordnung von zwei Wandteilen und dazwischen befindlicher Stützrippen entspricht im wesentlichen der anhand der Figuren 3 und 4 beschriebenen Gestaltung des Richtorgans 5. Dementsprechend steht einer Eintrittsöffnung des Richtorgans 6 eine kleinere Austrittsöffnung 8 (Figur 1) in einem Wandteil gegenüber, das mit einer ringförmigen Vertiefung zur radialen oder stärker als radialen Umlenkung eines Teiles der Schaltgase versehen ist. Diese Austrittsöffnung 8 befindet sich am Eingang eines Pufferraumes 9, der durch den Innenraum des Rohrleiters 7 gebildet ist. Dieser Innenraum kann entweder geschlossen oder an seinem Ende mit Entlastungsöffnungen versehen sein. Bei einem Schaltvorgang wirkt der Pufferraum 9 durch Kompressionen eines Teiles der Schaltgase als vorübergehender Speicher. Nach dem Ende des Schaltvorganges strömen die Schaltgase wieder ab und nehmen an der allgemeinen Durchmischung erhitzter und kühler Gase in dem Gehäuse 2 teil. Auf diese Weise wird die Beanspruchung aller Teile während des Schaltvorganges herabgesetzt.

Wie aus der vorstehenden Beschreibung in Verbindung insbesondere mit den Figuren 1 und 3 zu entnehmen ist, zeichnet sich der beschriebene Leistungsschalter durch eine verhältnismäßig kurze Bauform aus, die durch den Fortfall bisher verwendeter metallischer Schaltstangen zwischen der Antriebseinheit und der Unterbrechereinheit erreicht wird. Dadurch kann die Unterbrechereinheit 3 in dem Gehäuse 2 antriebsseitig durch einen verhältnismäßig kurzen Stützisolator 4 gehalten werden. Dabei wird die Beanspruchung des Stützisolators und der isolierenden Schaltstangen durch Schaltgase durch das zwischen dem Stützisolator 4 und der Unterbrechereinheit 3 angeordnete Richtorgan 5 vermindert, so daß ein Stützisolator mit verhältnismäßig einfacher Gestaltung und kurzer axialer Baulänge gewählt werden kann.

## Patentansprüche

1. Metallgekapselter Druckgas-Leistungschalter (1) mit einem gasgefüllten Gehäuse (2) und mit einer in dem Gehäuse (2) isoliert abgestützten Unterbrechereinheit (3), die einander mit einem Abstand gegenüberstehend angeordnete Kontaktrohre (15, 16) und einen zur Überbrückung der Kontaktrohre (15, 16) bewegbaren Schaltkontakt (20) sowie ein mit dem Schaltkontakt (20) verbundenes, eine Schaltbewegung übertragendes Schaltgestänge (26) aufweist, das wenigstens eine an dem Schaltkontakt (20) angekoppelte isolierende Schaltstange (26) umfaßt und einen Stützisolator durchsetzt,
**dadurch gekennzeichnet**, daß zwischen der Unterbrechereinheit (3) und dem Stützisolator (4) ein die Strömung der Schaltgase beim Ausschalten aufnehmendes und leitendes Richtorgan (5) angeordnet ist, das nur einen Teil der Schaltgase in der Richtung der wenigstens einen Schaltstange (26) hindurchtreten läßt (Pfeile 41) und den verbleibenden Teil bis in wenigstens radiale Richtung umlenkt (Pfeile 42).

2. Leistungschalter nach Anspruch 1, **dadurch gekennzeichnet**, daß das Richtorgan (5) eine Eintrittsöffnung (37) für die Schaltgase und eine mit dieser fluchtend angeordnete Austrittsöffnung (40) mit einem gegenüber der Eintrittsöffnung (37) geringeren Querschnitt aufweist.

3. Leistungsschalter nach Anspruch 2, **dadurch gekennzeichnet**, daß ein mit der Austrittsöffnung (40) versehender Wandteil (45) des Richtorgans (5) eine die Austrittsöffnung (40) ringförmig umgebende gewölbte Vertiefung (46) zur Umlenkung der Schaltgase bis wenigstens in radiale Richtung aufweist.

4. Leistungsschalter nach Anspruch 1, **dadurch gekennzeichnet**, daß ein mit der Eintrittsöffnung (37) und der mit der Austrittsöffnung (40) versehenden Wandteil (43 bzw. 45) des Richtorgans (5) entsprechend der Anzahl der Schaltstangen (26) des Gestänges durch Schirmrippen (53) in solcher Anordnung verbunden sind, daß die Schaltstangen (26) gegen die Strömung der Schaltgase abgeschirmt sind.

5. Leistungsschalter nach Anspruch 4, **dadurch gekennzeichnet**, daß die Wandteile (43, 45) des Richtorgans (5) brückenartig durch einen als elektrisches Anschlußstück ausgebildeten Steg (51) verbunden sind.

6. Leistungsschalter nach Anspruch 2, **dadurch gekennzeichnet**, daß der mit der Austrittsöffnung (40) versehene Wandteil (45) des Richtorgans (5) an seiner dem Stützisolator (4) zugewandten Seite eine dem Endbereich (50) des Stützisolators (4) angepaßte zentrische Vertiefung (47) besitzt.

7. Leistungsschalter nach einem der vorangehenden Ansprüche, **dadurch gekennzeichnet**, daß das Richtorgan (5) den anschließenden Endbereich (50) des Stützisolators (4) mit einem abgerundeten Ringwulst (48) umgebend ausgebildet ist.

8. Leistungsschalter nach einem der Ansprüche 1 bis 3, **dadurch gekennzeichnet**, daß ein weiteres Richtorgan (6) an der dem Stützisolator (4) abgewandten Seite der Unterbrechereinheit (3) angeordnet und die Austrittsöffnung (8) des weiteren Richtorgans (6) am Eingang eines innerhalb des Gehäuses (2) angeordneten zusätzlichen Pufferraumes (9) angeordnet ist.

9. Leistungsschalter nach Anspruch 6, **dadurch gekennzeichnet**, daß zur Verbindung des nur aus Isolierstoff bestehenden Stützisolators (4) mit dem Richtorgan (5) an dem Stützisolator (4) unter Freilassung einer zum Durchtritt der wenigstens einen Schaltstange (26) und von Schaltgasen bemessenen Öffnung (55) ein eingezogener Randbereich (60) und eine Klemmplatte (62) vorgesehen sind, die bei Auflage am Randbereich (60) des Stützisolators (4) sich in dessen Öffnung erstreckende Wandteile (66) zur Abgrenzung eines zum Durchtritt der wenigstens einen Schaltstange (26) bestimmten Bereiches und eines für die Abströmung der Schaltgase aus der Unterbrechereinheit (3) bestimmten zentralen Öffnung (55) aufweist.

10. Leistungsschalter nach einem der vorangehenden Ansprüche, **dadurch gekennzeichnet**, daß der Stützisolator (4) an seinem der Unterbrechereinheit (3) abgewandten Endbereich (38) außen einen gegenüber dem Rand axial zurückgesetzt angeordneten angeformten Flanschring (33) trägt, der einem an dem Gehäuse (2) angeordneten, als Gegenlager dienenden Tragring (32) angepaßt ist.

11. Leistungsschalter nach einem der vorangehenden Ansprüche, **dadurch gekennzeichnet**, daß als Gestänge zwei parallel angeordnete Schaltstangen (26) vorgesehen sind, die gelenkig mit dem Schaltkontakt (20) und einem zur Erzeugung einer Gasströmung dienenden Blaszylinder (17) sowie an ihren entgegengesetzten Enden mit einem Gabelhebel (25) verbunden sind, der über eine abgedichtet in das Gehäuse (2) des Leistungschalters (1) eingeführte Welle (24) zum Ein- und Ausschalten antreibbar ist.

12. Leistungsschalter nach Anspruch 11, **dadurch gekennzeichnet**, daß der Stützisolator (4) nur aus Isolierstoff besteht.

13. Leistungsschalter nach Anspruch 11, **dadurch gekennzeichnet**, daß der Stützisolator (4) die Gestalt eines hohlen Kegelstumpfes aufweist, dessen Mündungsweite im Bereich der Befestigung an dem gehäuseseitigen Tragring (32) entsprechend dem Schwenkwinkel der Schaltstangen (26) beim Ein- und Ausschalten gegenüber dem an dem Richtorgan (5) befestigten Endbereich (50) erweitert ist.

## Claims

1. Metal-enclosed compressed gas-blast circuit-breaker (1) having a gas-filled housing (2) and having an interrupter unit (3) which is supported in the housing (2) in an insulated manner and has contact tubes (15, 16), which are arranged opposite each other with an interspace, and a switch contact (20), which can be moved to bridge the contact tubes (15, 16), and also a switch rod system (26) which is connected with the switch contact (20), transmits a switching movement, comprises at least one insulating switch rod (26) coupled to the switch contact (20) and passes through a support insulator, characterised in that a directing element (5) is arranged between the interrupter unit (3) and the support insulator (4), which directing element (5) takes up and conducts the flow of the switch gases when switching off, allows only a portion of the switch gases to pass through in the direction of the at least one switch rod (26) (arrows 41) and diverts the remaining portion as far as in an at least radial direction (arrows 42).

2. Circuit-breaker according to claim 1, characterised in that the directing element (5) has an inlet opening (37) for the switch gases and an outlet opening (40) which is arranged in alignment with, and has a smaller cross section than, the inlet opening (37).

3. Circuit-breaker according to claim 2, characterised in that a wall portion (45) of the directing element (5), which is provided with the outlet opening (40), has an arched recess (46) which annularly surrounds the outlet opening (40) for the diversion of the switch gases as far as in an at least radial direction.

4. Circuit-breaker according to claim 1, characterised in that a wall portion (43) of the directing element (5) which is provided with the inlet opening (37) and the wall portion (45) of the directing element (5) provided with the outlet opening (40) are connected in accordance with the number of switch rods (26) of the rod system by means of screen ribs (53) in such an arrangement that the switch rods (26) are screened against the flow of the switch gases.

5. Circuit-breaker according to claim 4, characterised in that the wall portions (43, 45) of the directing element (5) are connected in a bridge-like manner by means of a web (51) which is formed as an electrical connecting piece.

6. Circuit-breaker according to claim 2, characterised in that the wall portion (45) of the directing element (5) provided with the outlet opening (40) has, on its side facing the support insulator (4), a centric recess (47) which is adapted to the end region (50) of the support insulator (4).

7. Circuit-breaker according to one of the preceding claims, characterised in that the directing element (5) is formed surrounding the joining end region (50) of the support insulator (4) with an annular bead (48) which is rounded off.

8. Circuit-breaker according to one of the claims 1 to 3, characterised in that a further directing element (6) is arranged on the side of the interrupter unit (3) which is remote from the support insulator (4) and the outlet opening (8) of the further directing element (6) is arranged at the inlet of an additional buffer chamber (9) which is arranged inside the housing (2).

9. Circuit-breaker according to claim 6, characterised in that there are provided on the support insulator (4), for the purposes of connection of the support insulator (4), which consists only of insulating material, with the directing element (5), whilst leaving free an opening (55) which is dimensioned for the passage of the at least one switch rod (26) and for the passage of switch gases, a drawn-in edge region (60) and a clamping plate (62) which has wall portions (66) which, when resting on the edge region (60) of the support insulator (4), extend into the opening of the latter, for the purpose of delimiting an area which is intended for the passage of the at least one switch rod (26) and a central opening (55) which is intended for the flow of the switch gases off out of the interrupter unit (3).

10. Circuit-breaker according to one of the preceding claims, characterised in that the support insulator (4) bears, on the outside of its end region (38) which is remote from the interrupter unit (3), a flange ring (33) which is pre-formed thereon, is arranged so as to be axially set back in relation to the edge and is adapted to a supporting ring (32) which is arranged on the housing (2) and which is used as a counter-bearing.

11. Circuit-breaker according to one of the preceding claims, characterised in that two switch rods (26), which are arranged in parallel, are provided as rod systems which are connected in an articulated manner with the switch contact (20) and with a blast cylinder (17), which is used to generate a gas flow, and also, at their opposite ends, with a fork lever (25) which for switching-on and -off purposes can be driven by way of a shaft (24) introduced in a sealed manner into the housing (2) of the circuit-breaker (1).

12. Circuit-breaker according to claim 11, characterised in that the support insulator (4) consists only of insulating material.

13. Circuit-breaker according to claim 11, characterised in that the support insulator (4) has the shape of a hollow truncated cone, the width of the mouth of which is extended in the region of securement to the supporting ring (32) on the housing side, in accordance with the angle of swing of the switch rods (26) when switching on and off, in relation to the end region (50) which is secured to the directing element (5).

## Revendications

1. Disjoncteur (1) à gaz sous pression, placé sous blindage métallique et comportant un boîtier (2) rempli par un gaz et une unité de sectionnement (3), qui est supportée de façon isolée dans le boîtier (2) et comporte des tubes de contact (15,16) disposés en vis-à-vis à une certaine distance réciproque, et un contact de coupure (20) déplaçable de manière à shunter les tubes de contact (15, 16), ainsi qu'une tringlerie de commutation (26) qui est raccordée au contact de commutation (20), transmet un déplacement de commutation et comprend au moins une barre isolante de commutation (26), qui est accouplée au contact de commutation (20) et traverse un isolateur de support d'un tube de contact, caractérisé par le fait qu'entre l'unité de sectionnement (3) et l'isolateur de support (4) est disposé un organe directif (5), qui loge et guide le courant des gaz de commutation lors de la coupure et qui laisse passer (flèches 41) seulement une partie des gaz de commutation en direction de la ou des barres de commutation (26) et renvoie (flèches 42) l'autre partie des gaz dans au moins une direction radiale.

2. Disjoncteur suivant la revendication 1, caractérisé par le fait que l'organe directif (5) comporte une ouverture d'entrée (37) pour les gaz de commutation et une ouverture de sortie (40), qui est alignée avec l'ouverture d'entrée et possède une section transversale inférieure à celle de l'ouverture d'entrée (37).

3. Disjoncteur suivant la revendication 2, caractérisé par le fait qu'un élément de paroi (45), pourvu de l'ouverture de sortie (40), de l'organe directif (5) comporte un renfoncement cintré (46), qui entoure selon une disposition annulaire l'ouverture de sortie (40) et sert à renvoyer les gaz de commutation au moins jusque dans une direction radiale.

4. Disjoncteur suivant la revendication 1, caractérisé par le fait qu'un élément de paroi (43) équipé de l'ouverture d'entrée (35) et l'élément de paroi (45) équipé de l'ouverture de sortie (40), de l'organe directif (5) sont raccordés, en fonction du nombre des barres de commutation (26) de la tringlerie, par des nervures de protection (53) selon une disposition telle que les barres de commutation (26) sont protégées vis-à-vis du courant des gaz de commutation.

5. Disjoncteur suivant la revendication 4, caractérisé par le fait que les éléments de paroi (43,45) de l'organe directif (5) sont raccordés selon une disposition en pont, par une barrette (51) agencée sous la forme d'un élément de raccordement électrique.

6. Disjoncteur suivant la revendication 2, caractérisé par le fait que l'élément de paroi (45), équipé de l'ouverture de sortie (40), de l'organe directif (5) comporte, sur son côté tourné vers l'isolateur de support (4), un renfoncement centré (47), adapté à la zone d'extrémité (50) de l'isolateur de support (4).

7. Disjoncteur suivant l'une des revendications précédentes, caractérisé par le fait que l'organe directif (5) est agencé de manière à entourer la zone d'extrémité contiguë (5) de l'isolateur de support (4), par un rebord annulaire arrondi (48).

8. Disjoncteur suivant l'une des revendications 1 à 3, caractérisé par le fait qu'un autre organe directif (6) est disposé sur le côté de l'unité de sectionnement (3), tourné à l'opposé de l'isolateur de support (4) et que l'ouverture de sortie (8) de l'autre organe directif (6) est disposée à l'entrée d'une chambre tampon supplémentaire (9) disposée à l'intérieur du boîtier (2).

9. Disjoncteur suivant la revendication 6, caractérisé par le fait que pour le raccordement de l'isolateur de support (4), constitué uniquement par un matériau isolant, à l'organe directif (5) il est prévu, sur l'isolateur de support (4), et ce moyennant le maintien d'une ouverture (55) dimensionnée de manière à permettre le passage de la ou des barres de commutation (26) et des gaz de commutation, une zone marginale en renfoncement (60) et une plaque de serrage (62), qui comporte des éléments de paroi (66), qui lorsqu'elle est en appui sur la zone marginale (60) de l'isolateur de support (4), s'étendent dans l'ouverture de cet isolateur et servent à délimiter une zone, qui est prévue pour le passage de la ou des barres de commutation (26), et une ouverture centrale (55) utilisée pour l'évacuation des gaz de commutation hors de l'unité de sectionnement (3).

10. Disjoncteur suivant l'une des revendications précédentes, caractérisé par le fait que l'isolateur de support (4) porte extérieurement, sur sa zone d'extrémité (32) tournée à l'opposé de l'unité de sectionnement (3), un anneau moulé formant bride (3), qui est disposé en étant axialement en renfoncement par rapport au bord et est adapté à un anneau de support (32) disposé sur le boîtier (2) et utilisé comme butée.

11. Disjoncteur suivant l'une des revendications précédentes, caractérisé par le fait qu'il est prévu, comme tringlerie, deux barres de commutation parallèles (26), qui sont raccordées de façon articulée au contact de commutation (20) et à un cylindre de soufflage (17) utilisé pour produire un courant de gaz, ainsi que, au niveau de leurs extrémités opposées, à un levier en forme de fourche (25), qui peut être entraîné pour la fermeture et la coupure, par l'intermédiaire d'un arbre (24) pénétrant de façon étanche dans le boîtier (2) du disjoncteur (1).

12. Disjoncteur suivant la revendication 11, caractérisé par le fait que l'isolateur de support (4) est réalisé uniquement en un matériau isolant.

13. Disjoncteur suivant la revendication 11, caractérisé par le fait que l'isolateur de support (4) possède la forme d'un tronc de cône creux, dont la zone d'embouchure est élargie au niveau de la fixation sur l'anneau de support (32) situé sur le boîtier, par rapport à la zone d'extrémité (50) fixée sur l'organe directif (5), conformément à l'angle de pivotement des barres de commutation (26) lors de la fermeture et de la coupure.
